# EUROPÄISCHE PATENTANMELDUNG

(11) **EP 1 947 061 A1**
(43) Veröffentlichungstag der Anmeldung: **23.07.2008**
(21) Anmeldenummer: 07122921.5
(22) Anmeldetag: 11.12.2007
(51) Int. Cl.: C02F 1/76, C02F 9/00

(54) **Verfahren zur Eliminierung von stickstoffhaltigen organischen Verbindungen aus salzhaltigem Wasser**

(30) Priorität: 22.01.2007 DE 102007004164
(71) Anmelder: LANXESS Deutschland GmbH, 51369 Leverkusen (DE)
(72) Erfinder: Weiss, Thomas, Dr., 68549 Ilvesheim (DE); Nyssen, Peter-Roger, 41542 Dormagen (DE); Bertram, Horst, 51107 Köln (DE); Stolp, Gunther, 50679 Köln (DE); Wagner, Paul, 40597 Düsseldorf (DE)

(57) **Zusammenfassung**

Die Erfindung betrifft ein Verfahren zur Eliminierung von stickstoffhaltigen, organischen Verbindungen aus einem salzhaltigen Wasser, das mehr als 0,5 Gew.-% Salz in Form von CaCl₂ oder NaCl, weniger als 200 ppm gelöste Kohlensäure oder Carbonate und mehr als 50 ppm an stickstoffhaltigen, organischen Verbindungen enthält, indem das Wasser durch Oxidation bei einer Temperatur von weniger als 100°C mit Chlor oder einem chlorhaltigen Oxidationsmittel behandelt wird und dieses bevorzugt nach zusätzlicher Oxidation mit einem gasförmigen Oxidationsmittel und/oder durch Absorption mit einem Adsorbens einer Elektrolyse zur Gewinnung von Chlor und/oder Natronlauge zugeführt wird.

## Beschreibung

Die Erfindung betrifft ein Verfahren zur Eliminierung von stickstoffhaltigen, organischen Verbindungen aus einem salzhaltigen Wasser, das mehr als 0,5 Gew.-% Salz in Form von CaCl₂ oder NaCl, weniger als 200 ppm gelöste Kohlensäure oder Carbonate und mehr als 50 ppm an stickstoffhaltigen, organischen Verbindungen enthält, dadurch gekennzeichnet, dass das Wasser durch Nassoxidation bei einer Temperatur von weniger als 100°C mit Chlor oder einem chlorhaltigen Oxidationsmittel, welche zu mehr als 10% über dem titrimetrisch bestimmten stöchiometrischen Bedarf eingesetzt werden, behandelt wird. In einer bevorzugten Ausführungsform wird das durch Nassoxidation behandelte Abwasser zusätzlich mit einem gasförmigen Oxidationsmittel behandelt und/oder einer Adsorption mit einem Adsorbens unterzogen. Das Ergebnis dieses, insbesondere mit zusätzlicher Oxidation mittels gasförmigen Oxidationsmittels und/oder Adsorption mit einem Adsorbens durchgeführten Verfahrens, ist ein salzhaltiges Abwasser mit einem Gesamtstickstoffgehalt von weniger als 10 ppm und einem TOC-Gehalt von weniger als 10 ppm. Dies erlaubt es, das Abwasser direkt einer Chlor/Alkali-Elektrolyse zur Herstellung von Chlor und/oder Natronlauge zuzuführen. Die Erfindung betrifft weiter ein Verfahren zur Herstellung von Chlor und/oder Natronlauge durch Elektrolyse, dadurch gekennzeichnet, dass das auf obige Weise behandelte Wasser durch Oxidation mit einem gasförmigen Oxidationsmittel und/oder durch Adsorption mit einem Adsorbens behandelt wird. Die Erfindung betrifft weiterhin die Verwendung des salzhaltigen, durch Nassoxidation behandelten Wassers und anschließend mit gasförmigem Oxidationsmittel und/oder durch Adsorption mit einem Adsorbens behandelten Wassers zur Herstellung von Chlor und/oder Natronlauge mittels Chlor/Alkali-Elektrolyse.

Viele Verfahren zum Abbau organischer Verbindungen in Wasser mittels Oxidation, ebenso wie Verfahren der Adsorption von Organika auf Adsorbentien, bevorzugt auf Aktivkohle, sind allgemein bekannt. Ferner sind Verfahren zur Ultrafiltration oder Extraktion bekannt.

Verfahren, wie das der vorliegenden Erfindung, werden üblicherweise in Verbindung mit einer biologischen Abwasserbehandlung eingesetzt, wenn es um die Eliminierung biologisch schlecht oder nicht abbaubarer organischer Schadstoffe geht. Hierbei dienen insbesondere Oxidationsverfahren als Abwasservorbehandlung der Umwandlung von nicht oder schlecht biologisch abbaubaren Verbindungen in bakteriell abbaubare Verbindungen. Eine vollständige Eliminierung der organischen Verbindungen, also von einem hohen Anfangs TOC (Total Organic Carbon) von mehr als 50 ppm, insbesondere von 100 bis 2000 ppm, auf TOC Werte von weniger als 10 ppm, auf Basis ausschließlich mit einem, oder der Kombination mehrerer, oben genannter Verfahren, ist nicht bekannt.

In EP-A 1 243 562 wird eine Kombination von Verfahren zur Eliminierung von organischen Verbindungen und stickstoffhaltigen, organischen Verbindungen beschrieben, bestehend aus einer ersten Denitrifizierungsstufe in Form der Nassoxidation bei 180-300°C im stark sauren Milieu unter Mitanwesenheit eines Denitrifizierungsmittels in Form eines Nitratsalzes eines aliphatischen oder aromatischen Amins und einer zweiten Stufe zur TOC-Eliminierung. Letztere kann Adsorption, Oxidation oder Neutralisation und biologische Behandlung sein. Es wird eine TOC-Eliminierung von 94 % bzw. ein TOC Restgehalt von maximal 18 ppm erreicht.

Eine Zusammenstellung wichtiger Oxidationsverfahren findet sich zum Beispiel in R. Munter et al., "Advanced Oxidation Processes (AOPs): Water Treatment Technology for the Twenty-first Century", Kemia-Kemi Vol. 28 (2001) 5. Ferner wird darin die Verwendung von Ozon, Wasserstoffperoxyd in Kombination miteinander und/oder mit UV-Bestrahlung und Katalysatoren zur Erzeugung der Hydroxylradikale beschrieben und (theoretisch) miteinander verglichen. Es können jedoch keine Hinweise für die Anwendung dieser Verfahren auf salzhaltige bzw. zusätzlich stickstoffhaltige organische Verbindungen enthaltende Wasser entnommen werden.

In J. Fehn, K. Held, Wasser Abwasser, 136 (1995) Nr. 6 findet sich eine Beschreibung der Ozonolyse, insbesondere in Kombination mit H₂O₂, in Anwendung auf biologisch schwer abbaubare Industriewasser mit einem Chloridgehalt von 25 mg/l. Herausgestellt wird der effizientere Ozonverbrauch und die höhere TOC-Abbaugeschwindigkeit mit Erhöhung des pH-Wertes von neutral auf bis pH 11,5. Der Anfangs-TOC-Gehalt betrug jedoch lediglich 55 mg/l und stickstoffhaltige, organische Verbindungen waren nicht anwesend. Auf den störenden Einfluss von Hydrogencarbonat wird hingewiesen, ebenso auf die hohen Investitions- und Betriebskosten der Ozonolyse.

In R. Hernandez et al., Journal of Hazardous Materials 92 (2002) 33-55 werden AOP Methoden wie UV, O₃, UV/O₃, UV/H₂O₂ sowie H₂O₂/O₃ auf mit 5 ppm Aceton kontaminiertem Abwasser verglichen. Nur in der Kombination von UV/O₃ konnte ein Abbau des Ketons von 99 % erreicht werden, die Ozonolyse alleine ergab weniger als 40 %. Stickstoffhaltige, organische Verbindungen oder Salze waren nicht zusätzlich anwesend.

Eine technische Ausführung der Ozonolyse kann beispielsweise der US 6 153 151 entnommen werden.

In WO 00/78682 wird ein Verfahren zur Behandlung eines Abwassers aus der Polycarbonatherstellung, enthaltend mehr als 2 ppm TOC und mindestens 0,1 Gew.-% gelöste Kohlensäure oder Carbonate, mit Ozon beschrieben. Das so behandelte Abwasser soll für die direkte Einleitung in Oberflächengewässer geeignet sein, insbesondere aber im Falle, dass das Abwasser gelöstes Kochsalz enthält, für die Wiederverwendung zur Herstellung von Chlor durch Elektrolyse geeignet sein. Der TOC-Gehalt des Wassers vor der Behandlung liegt bei max. 28 mg/l (Vergleichsbeispiel), also sehr niedrig; die bestimmenden organischen Verbindungen sind Phenole und Amine. Im Gegensatz zur Lehre aus J. Fehn (siehe oben) wird hervorgehoben, dass im neutralen pH Bereich ein deutlich verbesserter TOC Abbau stattfindet als bei pH 12 (Vergleichsbeispiele). Dies wird durch die Mitanwesenheit von Carbonaten erklärt. Aus WO 00/78682 kann nicht entnommen werden, ob auch hohe Anteile stickstoffhaltiger, organischer Verbindungen, insbesondere aus der Gruppe der Azine und ihrer Derivate, mittels Ozonolyse vollständig eliminiert werden können. Ebenso gibt es keinen Hinweis auf einen Verbleib von Reststickstoff, der, wie allgemein bekannt ist, in der Elektrolyse nur in sehr geringen Mengen von maximal 10 ppm vorkommen darf.

Stand der Technik für die Verwendung von Kochsalzlösungen in Elektrolyseverfahren ist, dass der Gehalt an organischen Verbindungen und des organisch/anorganisch gebundenen Stickstoffs so niedrig sein muss, dass es zu keiner Beeinträchtigung der Elektrolyse selbst und der Standzeiten der damit verbundenen Verfahrensteile wie z.B. der Membranen und/oder der Solefiltration und Soleaufarbeitung kommen kann. Die in der Chloralkalielektrolyse eingesetzte Kochsalzlösung darf daher bei Anwendung des Diaphragma- oder Amalgam-Elektrolyseverfahrens im Allgemeinen nicht mehr als 10 ppm an TOC enthalten. Bei Anwendung des Membranverfahrens werden noch niedrigere TOC-Grenzwerte gefordert. Der Gesamtstickstoffgehalt muss in allen Fällen ebenfalls < 10 ppm, insbesondere kleiner 1,0 ppm betragen.

Die Herstellung von Chlor und Natronlauge durch Elektrolyse von Kochsalz in wässriger Lösung kann beispielsweise aus Ullmann's Encyclopedia of Industrial Chemistry, Bd. A 6, 5. Auflage 1986, S. 441 - 477 entnommen werden. Ausführliche Details können auch aus "Referenzdokument über die besten verfügbaren Techniken in der Chloralkaliindustrie", Dezember 2001, Umweltbundesamt (German Federal Environmental Agency) entnommen werden.

Aufgabe der vorliegenden Erfindung war daher die Bereitstellung eines möglichst wirtschaftlichen Verfahrens zur weitgehend vollständigen Eliminierung stickstoffhaltiger, organischer Verbindungen aus einem salzhaltigen Wasser mit einem hohen Gehalt an stickstoffhaltigen, organischen Verbindungen vor der Behandlung sowie ein daraus resultierendes salzhaltiges Wasser bereitzustellen, das sowohl für die Einleitung in Oberflächen gewässer geeignet ist, oder aber einer Verwendung des gelösten Salzes zur Herstellung von Chlor und/oder Natronlauge nach elektrolytischen Verfahren zugeführt werden kann.

Überraschenderweise wurde gefunden, dass eine nahezu vollständige Eliminierung der stickstoffhaltigen organischen Verbindungen mittels Adsorption oder Ozonolyse gelingt, wenn das Wasser zuvor in einer Nassoxidation mit Chlor oder einem chlorhaltigen Oxidationsmittel behandelt wird.

Lösung der Aufgabe und somit Gegenstand der vorliegenden Erfindung ist ein Verfahren zur Eliminierung stickstoffhaltiger, organischer Verbindungen aus einem salzhaltigen Wasser, das mehr als 0,5 Gew.-% Salz in Form von CaCI₂ oder NaCI, weniger als 200 ppm gelöste Kohlensäure oder Carbonate und mehr als 50 ppm an stickstoffhaltigen, organischen Verbindungen enthält, dadurch gekennzeichnet, dass das Wasser durch Nassoxidation bei einer Temperatur von weniger als 100°C mit Chlor oder einem wässrigen, chlorhaltigen Oxidationsmittel behandelt wird, welche zu mehr als 10 % über dem titrimetrisch bestimmten stöchiometrischen Bedarf eingesetzt werden und das Wasser in einer bevorzugten Ausführung anschließend durch Oxidation mit einem gasförmigen Oxidationsmittel und/oder durch Adsorption mit einem Adsorbens behandelt wird.

Überraschenderweise erhält man durch das erfindungsgemäße Verfahren ein salzhaltiges Abwasser mit einem Gesamtstickstoffgehalt (N_{ges})von weniger als 10 ppm, was es erlaubt, dieses direkt einer Chlor-Alkali-Elektrolyse zuzuführen. Bevorzugt enthält das zu behandelnde, salzhaltige Wasser mehr als 2 Gew.-% Salz, weniger als 50 ppm gelöste Kohlensäure oder Carbonate und mehr als 150 ppm stickstoffhaltige, organische Verbindungen.

Erfindungsgemäß besteht bezüglich der stickstoffhaltigen, organischen Verbindungen keine Einschränkung. Insbesondere werden jedoch darunter Verbindungen aus der Gruppe der Azine, organische Amine, Pyrazoline, Hydrazone, Hydrazine, Diazirine, Diaziridine oder Oxime und deren Derivate verstanden.

Für das erfindungsgemäße Verfahren besonders relevante stickstoffhaltige, organische Verbindungen werden beispielsweise im Abwasser aus Anlagen zur Herstellung von Hydrazinhydrat erhalten.

Die Herstellung von Hydrazinhydrat erfolgt technisch aus wässrigen Lösungen von Ammoniak und einem Oxidationsmittel, wie Natriumhypochlorit oder Wasserstoffperoxid, unter Anwesenheit einer Carbonylverbindung.

Verfahren zur Herstellung von Hydrazinhydrat sind bekannt und können z.B. aus "Ullmann's Encyclopedia of Industrial Chemistry", 2002, Wiley-VCH-Verlag GmbH und Co. KGaA Zeilen 1-15, entnommen werden. Demnach erhält man technisches Hydrazin zunächst als Derivate, von denen es leicht und mit guter Ausbeute durch hydrolytische Spaltung gewonnen werden kann. Als Hydrazin-Derivate sind insbesondere niedermolekulare Azine wie z.B. Acetonazin und Methylethylketonazin geeignet.

Bekannt ist insbesondere der sogenannte "Bayer-Ketazin-Prozess" (= Bayer-Aceton-Raschig-Verfahren), der auf der Oxidation von Ammoniak mittels Natriumhypochlorit beruht. Dieses Verfahren kann beispielsweise der US 3 077 383 entnommen werden, wonach die Reaktion von Ammoniak und Natriumhypochlorit unter gleichzeitiger Anwesenheit einer Carbonylverbindung erfolgt. Die erhaltenen Azine und/oder Hydrazone werden dabei als wässrige Lösung vom zwangsweise anfallenden Natriumchlorid destillativ getrennt und zu Hydrazin aufgearbeitet, beispielsweise in Form der "sauren Hydrolyse" durch Behandlung mit einer Säure. Aus DE-A 1 130 797 geht ein weiter verbessertes Verfahren hervor, wonach wässrige Ketazin- und/oder Hydrazonlösungen bei erhöhtem Druck und erhöhter Temperatur in einer Kolonne rektifiziert werden und dabei in Keton am Kopf der Kolonne und wässrige, ketonfreie Hydrazinlösung am Boden der Kolonne hydrolytisch gespalten werden.

In diesem Prozess fällt erfindungsgemäß zu behandelndes Wasser als 2-14 %ige, bevorzugt 8-12 %ige wässrige Lösung von Natriumchlorid an, enthaltend weitere Komponenten:
1. TOC in einem Bereich von 100 bis 10 000 ppm,
2. Gesamtstickstoff N_{ges} in einem Bereich von 50 bis 10 000 ppm, enthaltend stickstoffltaltige, organische Verbindungen, N₂H₄-H₂O, Ammonium und NOₓ, worin X für eine ganze Zahl 2 oder 3 steht,
3. Carbonate oder Kohlensäure.

Stickstoffhaltige, organische Verbindungen sind darin erfindungsgemäß bevorzugt Dimethylhydrazon, Dimethylketazin, Isopropylhydrazon, Acetonoxim, 3,5,5-Tritnethylpyrazolin oder Pinakolinhydrazon.

Der Gehalt an stickstoffhaltigen, organischen Verbindungen ist abhängig von den Prozessbedingungen in dem oben beschriebenen Verfahren zur Herstellung von Hydrazinhydrat. Im Allgemeinen beträgt er mehr als 50 ppm, vorzugsweise mehr als 150 ppm und insbesondere mehl' als 250 ppm. Daneben können 100 bis 10 000 ppm, vorzugsweise 200 bis 2 000 ppm Hydrazinhydrat enthalten sein; ferner können in dem Wasser stickstofffreie, organische Verbindungen, besonders besagte Carbonylverbindungen und deren Derivate, insbesondere Aceton, Isopropanol, Methanol, Pinakolin sowie Abbauprodukte und Derivate dieser Verbindungen enthalten sein. Der Gehalt dieser stickstofffreien, organischen Verbindungen beträgt im Allgemeinen mehr als 10 ppm, vorzugsweise mehr als 100 ppm. Schließlich können in dem Wasser noch andere anorganische, stickstoffhaltige Verbindungen, insbesondere Ammonium und/oder Ammoniak in Höhe von mehr als 5 ppm, vorzugsweise mehr als 10 ppm enthalten sein. Der in dem Wasser aus dem Hydrazin-Syntheseprozess enthaltene Anteil an Kohlensäure oder gelöstem Carbonat ist gering und beträgt weniger als 200 ppm, insbesondere weniger als 50 ppm. Der Gehalt an AOX beträgt weniger 10 ppm, insbesondere weniger als 1 ppm. Mit dem erfindungsgemäßen Verfahren gelingt es, im Abwasser solcher aus dem Stand der Technik bekannten Hydrazinanlagen auch alle organischen Verbindungen (TOC) und anorganischen, stickstoffhaltigen Verbindungen einschließlich Hydrazinhydrat und Ammoniak zu eliminieren, insbesondere den Gehalt an Gesamtstickstoff (N_{ges}) und den TOC-Gehalt jeweils auf weniger als 10 ppm zu reduzieren.

Der Gehalt an Kohlenstoff, der in Form von organischen Verbindungen vorliegt, wird als TOC ("Total Organic Carbon") bezeichnet, Die Bestimmung erfolgt in Anlehnung an DIN 38409 -H3 über eine Messung des Gesamtgehaltes organischen und anorganischen Kohlenstoffs (TC, "Total Carbon") und einer Messung des Gehaltes anorganischen Kohlenstoffs (TIC, "Total Inorganic Carbon") gemäß folgender Gleichung:
TOC = TC -TIC

Diese Methode ist insbesondere dann sehr zuverlässig, wenn der TIC Wert deutlich kleiner als der TC Weit ist,

Der Gesamtstickstoffgehalt (N_{ges}) entspricht dem Gehalt des gesamten gebundenen Stickstoffs (TN_{b}), die Bestimmung erfolgt gemäß DIN 38409-H27. Der Parameter TN_{b} ist dabei als Summe von organisch gebundenem Stickstoff, Ammonium- und Nitrit- und Nitratstickstoff, berechnet als N, definiert und entspricht dem Gesamtstickstoff (N_{ges})

Die Bestimmung der adsorbierbaren organisch gebundenen Halogene (AOX) erfolgt nach DIN 38409-H14,

Erfindungsgemäß besteht bezüglich der in dem zu behandelnden Wasser enthaltenen Salze keine Einschränkung. Insbesondere können mit dem Verfahren auch andere, stickstoffhaltige, organische Verbindungen enthaltende Wasser behandelt werden, die beispielsweise infolge Neutralisation andere Salze enthalten. Bevorzugte Salze sind jedoch CaCl₂ und NaCl, besonders bevorzugt NaCl.

Die Nassoxidation erfolgt mit elementarem Chlor in flüssiger oder gasförmiger Form oder mit einem chlorhaltigen Oxidationsmittel, bevorzugt mit Natriumhypochlorit (NaOCl) als 5 - 18 % ige wässrige Lösung, bei einem pH Wert von 2 - 12, vorzugsweise 6 - 9. Die Temperatur beträgt 20 - 95 °C, vorzugsweise 30 - 80 °C, insbesondere 50 - 70 °C. Die einzusetzende Menge an NaOCl oder Chlor richtet sich nach der Menge oxidativer Bestandteile, Diese Menge kann mittels titrimetrischer Methoden bestimmt werden. Es ist erfindungsgemäß vorteilhaft, einen Überschuss an NaOCl einzusetzen. Im Anschluss an die Nassoxidation kann gegebenenfalls eine Strippung der flüchtigen organischen Verbindungen und Stickstoffverbindungen erfolgen. Die Strippung kann mittels Luft oder in einer dampfbeheizten Destillationskolonne erfolgen, wobei vorzugsweise eine Menge von weniger als 20 Gew.%, insbesondere weniger als 15 Gew.-% Destillat bezogen auf die zu behandelnde Wassermenge kondensiert und abgetrennt wird. Vor oder während der Nassoxidation kann eine pH-Einstellung erforderlich sein. Insbesondere wenn das zugeführte Wasser, bevorzugt aus dem Herstellungsprozess für Hydrazinhydrat, einen pH Wert größer als 12 besitzt, erfolgt erfindungsgemäß die pH-Einstellung mit einer anorganischen Säure, vorzugsweise mit Salzsäure mit einem TOC von weniger als 10 000 ppm, bevorzugt. weniger als 2000 ppm. Beispielsweise wird eine Oxidation mit Chlor oder NaOCl in US 4,056,469 beschrieben.

Nach der erfindungsgemäßen Nassoxidation erhält man ein Wasser mit
- einem AOX-Gehalt von mehr als 10, bevorzugt mehr als 50 ppm,
- einem TOC-Gehalt von weniger als 300, bevorzugt weniger als 200 ppm,
- einem Gehalt an Hydrazinhydrat von weniger als 50, bevorzugt weniger als 10 ppm und
- einem Gesamtstickstoffgehalt von weniger als 50 ppm, bevorzugt weniger als 20 ppm.
   Dieses Wasser ist bereits für die Einleitung in Oberflächengewässer und/oder biologischen Kläranlagen geeignet. Bei höheren Salzgehalten wirtschaftlich vorteilhaft und erfindungsgemäß bevorzugt wird das Wasser jedoch der Chloralkalielektrolyse zur Herstellung von Chlor und/oder Natronlauge zugeführt. Im Anschluss an die Nassoxidation schließt sich deshalb bevorzugt eine weitere Behandlung an, um den Gehalt an stickstoffhaltigen, organischen Verbindungen weiter zu reduzieren. Erfindungsgemäß handelt es sich dabei um die Adsorption auf oder an einem Adsorbens (physikalisch), die weitere chemische Oxidation mit einem gasförmigen Oxidationsmittel, oder eine geeignete Kombination dieser beiden Methoden.
   Erfindungsgemäß besteht hinsichtlich der zu verwendenden Adsorbentien keine Einschränkung. Es kommen sowohl polare als auch unpolare, organische oder anorganische Adsorbentien in Frage. Als hydrophile (polare) Adsorptionsmitteln kommen bevorzugt Silicagel, Aluminiumoxid, Zeolithe und einige Tonarten in Frage. Diese eignen sich insbesondere für die Abtrennung polarer Komponenten. Als hydrophobe (unpolare) Adsorbentien kommen bevorzugt mikroporöse, polymere Verbindungen (Ionenaustauscher, Harze wie z.B. gegebenenfalls funktionalisierte, vernetzte Copolymerisate auf Basis von Styrol und Divinylbenzol), dealuminierte NaY-Zeolithe und kohlenstoffhaltige oder Kohlenstoff-basierende Adsorptionsmittel infrage. Besonders bevorzugt werden Aktivkohle oder mikroporöse Adsorberharze aufgrund ihrer hydrophoben Eigenschaften zur Entfernung von wenig polaren Schadstoffen und chlorierten Kohlenwasserstoffen aus dem Abwasser eingesetzt.
   Die Aktivkohle kann entweder als Granulat in Behandlungskolonnen oder als Pulver eingesetzt werden. Bevorzugt wird Aktivkohle in Granulatform, die mit allgemein bekannten technischen Methoden, insbesondere thermischen Methoden, regeneriert werden kann. Für die einzusetzenden Aktivkohlen besteht erfindungsgemäß keine Einschränkung, insbesondere kommen Aktivkohlen auf Basis von Rohmaterialien wie Steinkohle, Steinkohlenteer, Biomasse, Sägemehl oder Nussschalen (z.B. Walnussschalen oder Kokosnussschalen) in Betracht. Technische Produktionsverfahren können der US 2006/0204429 entnommen werden.
   Mikroporöse Adsorberharze werden beispielsweise durch Carbonisierung von polymeren Ionenaustauscherharzen erhalten und sind beispielsweise unter dem Handelsnamen Lewatit® AF 5 von Lanxess Deutschland GmbH erhältlich.
   Die Adsorption an Aktivkohle oder mikroporösem Adsorberharz erfolgt bevorzugt bei einem pH-Wert des Wassers von 1- 8, vorzugsweise 2 - 6 und insbesondere 2 - 4. Erfindungsgemäß bevorzugt erfolgt die pH-Einstellung mit einer anorganischen Säure, vorzugsweise mit Salzsäure mit einem TOC von weniger als 1000 ppm, bevorzugt weniger als 700 ppm. Im Anschluss an die Adsorption erfolgt gegebenenfalls eine Neutralisation des Wassers mit bevorzugt Natronlauge.
   Als gasförmiges Oxidationsmittel kommen bevorzugt Sauerstoff oder Ozon, besonders bevorzugt Ozon, in Betracht. Die Behandlung mit gasförmigem Oxidationsmittel, besonders bevorzugt Ozon, erfolgt bevorzugt bei einer Temperatur von 20 -130 °C, besonders bevorzugt bei 60 - 90 °C und bevorzugt bei einem Druck von 0,5 - 3 bar abs., besonders bevorzugt bei 1 - 2 bar abs. Im Folgenden steht Ozon der Einfachheit halber als Repräsentant für gasförmige Oxidationsmittel. Das der Ozonolyse zugeführte Wasser besitzt bevorzugt einen pH Wert (gemessen bei 20°C) von 6 - 12, besonders bevorzugt 7 - 9. Erfindungsgemäß kann eine Einstellung des pH Wertes vor, während oder nach der Ozonolyse erfolgen. Im Falle von NaCl-haltigem Wasser wird bevorzugt Natronlauge oder Salzsäure zur Einstellung verwendet.
   Für die apparative Ausführung der Ozonolyse bestehen keine erfindungsgemäßen Einschränkungen. Das Ozongas wird in einem allgemein bekannten Ozongenerator, beispielsweise einem Corona-Entladungsgenerator, erzeugt und intensiv mit dem Wasser vermischt. Als Trägergas kommt Luft oder Sauerstoff, vorzugsweise Sauerstoff in Betracht. Der Gehalt an Ozon nach dem Generator beträgt mehr als 4 Gew.%, vorzugsweise mehr als 10 Gew.% (WO 00/78682: 40 - 150 g Ozoti/m³ Gas). Der intensiven Vermischung mit dem Wasser kommt besondere Bedeutung für die Effizienz der Ozonolyse zu. Technische Methoden sind beispielsweise Vermischung mittels Impellerrührer in einem Reaktor (US 6153151), Ultraschall, Düseninjektoren (US 2005/0121398 A1), Glas- oder Keramikfritten oder anorganischen oder polymeren semipermeablen Membranen. Erfindungsgemäß erfolgt die Ozonolyse in einem kontinuierlichen oder quasi-kontinuierlichen Verfahren. Bezüglich der Dauer der Ozonolyse besteht keine Einschränkung. Bevorzugt erfolgt sie über einen Zeitraum von weniger als 2, insbesondere weniger als 1 Stunde (mittlere Verweilzeit des Wassers), In einer kontinuierlichen Verfahrensweise kann die Behandlung bevorzugt in einer oder mehreren in Reihe geschalteten Reaktionskolonnen erfolgen, wie beispielsweise in WO 00/78682 beschrieben. Während oder nach der Ozonbehandlung kann eine Strippung des Wassers mit Luft oder Dampf erfolgen.
   Erfindungsgemäß bevorzugt kann die Behandlung mit Ozon vor, während oder nach der Adsorption durchgeführt werden. Besonders bevorzugt erfolgt die Behandlung mit Ozon nach der Adsorption um gegebenenfalls nicht adsorbierte Restanteile an TOC vollständig zu eliminieren.
   In weiteren bevorzugten Ausführungen der Erfindung kann vor, während oder nach der Behandlung mit Ozon zusätzlich eine Behandlung des Wassers mit Wasserstoffperoxid und/oder UV-Bestrahlung erfolgen. Besonders bevorzugt ist die gleichzeitige Behandlung mit Ozon und UV-Bestrahlung und/oder Wasserstoffperoxid.
   Das salzhaltige Wasser besitzt nach der Adsorption und/oder Oxidation mit Ozon
- einen Gesamtstickstoffgehalt von weniger als 10 ppm,
- einen TOC-Gehalt von weniger als 10 ppm, bevorzugt weniger als 1 ppm und
- einen AOX-Gehalt von weniger als 10 ppm, bevorzugt weniger als 1 ppm.
   Bei einem Salzgehalt von 2 - 20 Gew. % wird dieses Wasser erfindungsgemäß bevorzugt der Chloralkalielektrolyse zugeführt, insbesondere der Diaphragma- oder Membranelektrolyse. Die Zuführung erfolgt in den sogenannten Solekreislauf vorzugsweise vor oder während der Soleaufarbeitung. Die Soleaufarbeitung umfasst je nach Elektrolyseverfahren unter anderem die Fällung von unerwünschten Ca-, Mg-Ionen und anderen Metallen, die Filtration der Sole, gegebenenfalls Membranfiltration, gegebenenfalls. Adsorption und die Nachführung von reinem NaCl (gereinigtes Steinsalz) und Wasser. Erfindungsgemäß kann die Salzkonzentration des erfindungsgemäßen) salzhaltigen Wassers vor, während oder nach der Nassoxidation oder während oder nach der Adsorption und/oder Ozonbehandlung eingestellt werden. Bevorzugt wird die Salzkonzentration mittels Eindampfung oder durch Zuführung von reinem Salz auf mehr als 16 Gew.%, bevorzugt mehr als 20 Gew.% eingestellt, bevor es in den Solekreislauf der Elektrolyse eingebracht wird.

### Beispiele

### Beispiel 1: Nassoxidation mit Natriumhypochlorit

9 kg Abwasser [Dichte: 1.07 g/ml, 12 Gew% NaCl, pH 12.4; TOC: 834 ppm, Hydrazinhydrat: 900 ppm, 8.1 g, 0.162 mol (jodometrische Bestimmung] wurden mit Salzsäure neutralisiert. Es wurden 36.4 g 37%ige Salzsäure (0.37 mol) benötigt um pH 7.08 zu erhalten.

Anschließend wurde 341 g NaOCl-Lösung (45.04 g, 0.605 mol NaOCl, Natriumhypochlorit) in Form einer 13.2 gew%igen Lösung bei 25 °C zugesetzt. Dabei stieg das Redoxpotential von -557 mV auf 957 mV an (Referenzelektrode Ag/AgCl). Der Überschuß an NaOCI bezogen auf den jodometrischen Verbrauch für Hydrazinhydrat betrug dabei 73 mol% (83 Gew%). Es wurde ein TOC von 300-400 ppm gefunden.

Anschließend wurde das Wasser für 0.5 h auf 50 °C erwärmt. Bei 25 °C lag ein pH-Wert von 6.46 und ein Redoxpotential von 977 mV vor. Mittels titrimetrischer Bestimmung (0,05 m NaAsO₂) wurde der Verbrauch an NaOCl bestimmt. Es wurden 9,39 g, 0.126 mol NaOCI erfasst. 80 Gew.-% des NaOCI hatte sich umgesetzt.

In einem weiteren Schritt wurde das auf diese Weise behandelte Wasser bei 95°C mit Luft für 0,5 h gestrippt. Dabei wurde ein Kondensat mit 681 g, TOC: 170-251 ppm, und einem Rest-Chlorgehalt (als NaOCl gerechnet) von 0,11 % erhalten.

Im Sumpf der Strippung wurde nach Abkühlen auf 25 °C ein pH von 4,9 und ein Redoxpotential von 1060 gemessen. Es wurden 0.85 g, 0.0115 mol NaOCl erfasst, d.h. 98 Gew.-% des eingesetzten NaOCl wurden verbraucht.

Das Wasser hatte einen leicht chlorigen Geruch und wies einen TOC von 184 ppm, einen AOX von 79 ppm sowie einen N_{ges} von weniger als 15 ppm auf.

### Beispiel 2: Ozonolyse

Ein Abwasser, dass wie in Beispiel 1 beschrieben mit NaOCl vorbehandelt wurde, wurde in einer Ozonolyseapparatur bestehend aus einem Ozongenerator, einem Rührreaktor, einer Ozon-Durchflussmessung und einer pH-Kontrolle mit Ozon bei pH 7 und 80 °C behandelt. Als Trägergas wurde Sauerstoff eingesetzt. Dabei wurde die Menge des eingetragenen Ozon (g/L), die Versuchsdauer und die Messparameter TOC, AOX und N_{ges} durch Probennahme erfasst. Die Ergebnisse sind in Tabelle 1 dargestellt.

Vergleichsbeispiel 1: Ozonolyse eines nicht vorbehandelten Abwassers

Ein vergleichbares wie in Beispiel 1 eingesetztes Abwasser mit einem TOC von 620 ppm, das jedoch nicht einer Vorbehandlung mittels NaOCl unterzogen wurde, wurde ebenfalls wie in Beispiel 2 beschrieben, mit Ozon behandelt. Es zeigte sich, dass selbst bei deutlich höherem Ozoneintrag und längerer Behandlungsdauer ein TOC von weniger als 10 ppm nicht erreicht werden konnte (Tabelle 1),

**Tabelle 1**

| **Probe** | **Ozoneintrag [g/L]** | **Versuchsdauer [min]** | **TOC [ppm]** | **AOX [ppm]** | **N total [ppm]** |
|---|---|---|---|---|---|
| NaOCI vorbehandeltes Abwasser (Beispiel 1) | 0 | 0 | 199 | 79 | 15 |
| 1 | 0,9 | 35 | 92 | - | - |
| 2 | 1,7 | 69 | 21 | 25 | - |
| 3 | 2,5 | 102 | 8 | - | - |
| 4 | 3,2 | 136 | 4 | 1 | - |
| 5 | 3,9 | 176 | 3 | - | - |
| 6 | 4,8 | 227 | 3 | - | 13 |
| Unvorbehandeltes Abwasser (Vergleichsbeispiel 1) | 0 | 0 | 620 | - | - |
| 1 | 1,0 | 30 | 400 | - | - |
| 2 | 2,0 | 90 | 200 | - | - |
| 3 | 3,6 | 120 | 30 | - | - |
| 4 | 5,2 | 180 | 15 | - | - |

### Beispiel 3; Adsoprtion mit Vorbehandlung

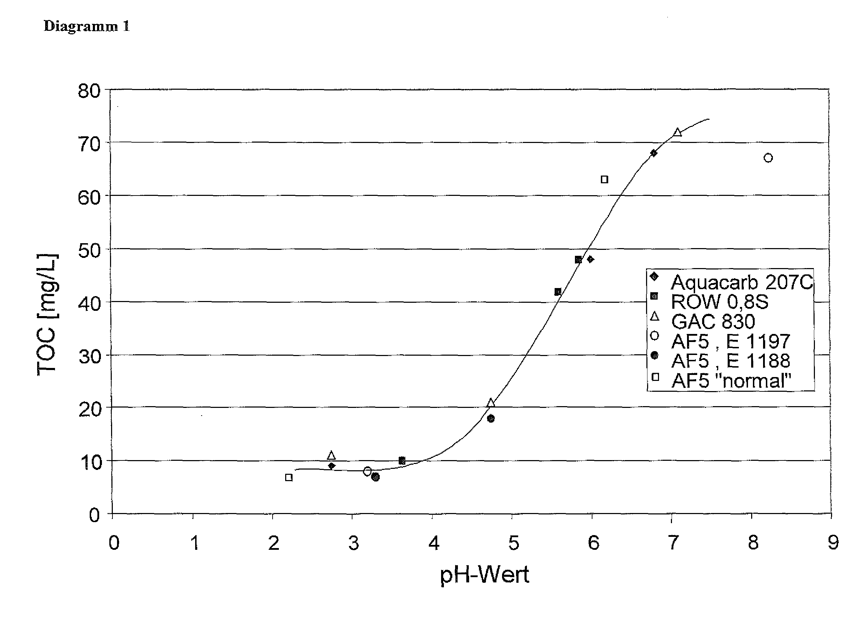

Das wie in Beispiel 1 beschriebene, mit NaOCl voroxidierte Wasser wurde in Schüttelversuchen mit Aktivkohlen (Aquacarb® 270C (Fa. Chemviron Carbon), GAC 830, ROW 0.85 Supra (beide Fa. Norith) sowie 2 Lewatit® AF5-Typen, speziellen mikroporösen Adsorberharzen der Firma Lanxess Deutschland GmbH behandelt. Dabei wurden jeweils 100 g der Adsorbentien mit 1000 ml Wasser aus Beispiel 1 in einer zylindrischen Flasche bei pH 3 - 8 versetzt und 48 h bei 25 °C in einer Rollapparatur in Bewegung gehalten, so dass sich ein thermodynamisches Adsorptions-Desorptions-Gleichgewicht einstellen konnte. Es wurde mit allen Adsorbentien bei einem pH-Wert von weniger 4 ein TOC-Gehalt von weniger als 10 ppm erreicht (Diagramm 1).

### Vergleichsbeispiel 2: Adsorption eines nicht vorbehandelten Abwassers

Ein vergleichbares wie in Beispiel 1 eingesetztes Abwasser mit TOC von 820 ppm und N_{ges} von 460 ppm wurde ohne Vorbehandlung mit NaOCl durch Adsorption mit Aquacarb® 270C, wie in Beispiel 3 beschrieben, behandelt. Man erhielt einen TOC von 74 ppm und einen N_{ges} von 320 ppm. Auch mit den anderen Adsorbentien wurden keine niedrigeren TOC gefunden.

## Patentansprüche

1. Verfahren zur Eliminierung stickstoffhaltiger, organischer Verbindungen aus einem salzhaltigen Wasser das
- mehr als 0,5 Gew.% Salz in Form von CaCl₂ oder NaCl,
- weniger als 200 ppm gelöste Kohlensäure oder Carbonate und
- mehr als 50 ppm stickstoffhaltige, organische Verbindungen enthält,
**dadurch gekennzeichnet, dass** das Wasser durch Nassoxidation bei einer Temperatur von weniger als 100°C mit Chlor oder einem chlorhaltigen Oxidationsmittel, welche zu mehr als 10 % über dem titrimetrisch bestimmten stöchiometrischen Bedarf eingesetzt werden, behandelt wird.

2. Verfahren gemäß Anspruch 1, **dadurch gekennzeichnet, dass** das zu behandelnde salzhaltige Wasser mehr als 2 Gew.% Salz, weniger als 50 ppm gelöste Kohlensäure oder Carbonate und mehr als 150 ppm stickstoffhaltige, organische Verbindungen enthält.

3. Verfahren gemäß der Ansprüche 1 oder 2, **dadurch gekennzeichnet, dass** die zu eliminierenden stickstoffhaltigen, organischen Verbindungen aus der Gruppe der Azine und/oder deren Derivate sind.

4. Verfahren gemäß der Ansprüche 1 bis 3, **dadurch gekennzeichnet, dass** die erhältlichen salzhaltigen Wässer zusätzlich durch Oxidation mit einem gasförmigen Oxidationsmittel und/oder einer Adsorption auf oder an mindestens einem Adsorbens behandelt werden.

5. Verfahren gemäß Anspruch 4, **dadurch gekennzeichnet, dass** als Adsorbens hydrophobe Adsorbentien, bevorzugt Aktivkohle oder Kohlenstoff-basierende mikroporöse Adsorberharze eingesetzt werden.

6. Verfahren gemäß Anspruch 4 oder 5, **dadurch gekennzeichnet, dass** das gasförmige Oxidationsmittel Sauerstoff oder Ozon ist.

7. Verwendung der nach den Ansprüchen 4 bis 6 erhältlichen, salzhaltigen Wässer zur Herstellung von Chlor und/oder Natronlauge durch Elektrolyse.

8. Verwendung gemäß Anspruch 7, **dadurch gekennzeichnet, dass** die Salzkonzentration des salzhaltigen Wassers vor, während oder nach der Behandlung mittels Eindampfung oder durch Zuführung von gereinigtem Steinsalz auf mehr als 16 Gew.-% eingestellt wird.

9. Verwendung gemäß der Ansprüche 7 oder 8, **dadurch gekennzeichnet, dass** die Elektrolyse nach dem Diaphragma- oder Membranelektrolyseverfahren erfolgt.
